# EUROPEAN PATENT APPLICATION

(11) **EP 4 563 683 A1**
(43) Date of publication of application: **04.06.2025**
(21) Application number: 23212912.2
(22) Date of filing: 29.11.2023
(51) Int. Cl.: C11D 1/825, C08L 71/02

(54) **MIXTURE OF BIO-BASED GLYCEROL ESTER ALKOXYLATES**

(71) Applicant: Clariant International Ltd, 4132 Muttenz (CH)
(72) Inventor: GRASSL, Simon, Burgkirchen, 84508 (DE); LEINWEBER, Dirk, Frankfurt, 65926 (DE); THIEL, Niklas Olof, Burgkirchen, 84508 (DE)
(74) Representative: Clariant Produkte (Deutschland) GmbH

(57) **Abstract**

Specific mixtures of bio-based glycerol ester alkoxylates are described. The mixtures may be used in automatic dishwashing compositions, e.g. to provide a beneficial performance such as a beneficial rinse aid performance and/or a beneficial drying performance.

## Description

The present invention relates to specific mixtures of glycerol ester alkoxylates, to a method for their preparation, to alkoxylation products obtainable by this preparation method, and to automatic dishwashing compositions comprising the mixtures of glycerol ester alkoxylates or the alkoxylation products.

Substances that may be used in automatic dishwashing compositions and provide a beneficial performance such as a beneficial rinse aid performance and/or a beneficial drying performance, are already known. However, there is still a need for further substances that may be employed in such compositions.

It has been found that a mixture of glycerol ester alkoxylates of the formula (I) 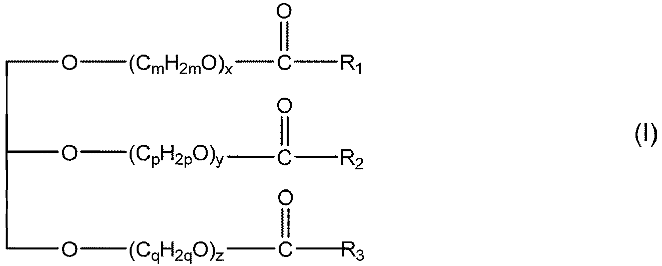 wherein
- R₁, R₂ and R₃: are the same or different and are independently selected from the group consisting of linear or branched, preferably linear, saturated alkyl groups with 7 to 29 carbon atoms, linear or branched, preferably linear, mono- or polyunsaturated alkenyl groups with 7 to 29 carbon atoms, and combinations thereof,
- m, p and q: are the same or different and are independently 2 or 3 or mixtures thereof, and preferably are 2,
- x, y and z: are the same or different and are independently selected from integer numbers from 1 to 200, and

the average number of the sum of x + y + z of the glycerol ester alkoxylates of the formula (I) in the mixture (which is designated as variable "n") is greater than 5, preferably from 9 to 250, more preferably from 9 to 200, even more preferably from 20 to 175, and particularly preferably from 25 to 175,
characterized in that at least 25 wt.-%, preferably at least 50 wt.-%, more preferably at least 75 wt.-%, even more preferably at least 90 wt.-% and particularly preferably 100 wt.-% of all of the carbon atoms of the units -(CₘH₂ₘO), -(CₚH₂ₚO) and -(C_{q}H_{2q}O) in the glycerol ester alkoxylates of the formula (I) of the mixture, in each case based on the total weight of all of the carbon atoms of the units -(CₘH₂ₘO), -(CₚH₂ₚO) and -(C_{q}H_{2q}O) in the glycerol ester alkoxylates of the formula (I) of the mixture, are bio-based,
may be used in automatic dishwashing compositions, e.g. to provide a beneficial performance such as a beneficial rinse aid performance and/or a beneficial drying performance.

Therefore, a subject matter of the invention is a mixture of glycerol ester alkoxylates of the formula (I) 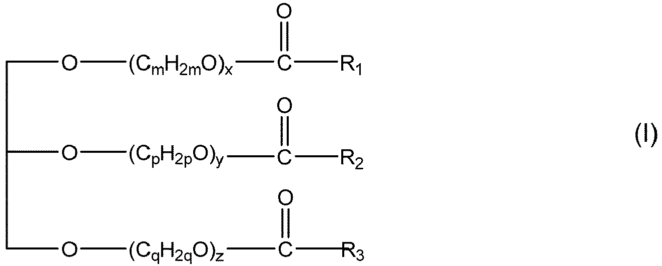 wherein
- R₁, R₂ and R₃: are the same or different and are independently selected from the group consisting of linear or branched, preferably linear, saturated alkyl groups with 7 to 29 carbon atoms, linear or branched, preferably linear, mono- or polyunsaturated alkenyl groups with 7 to 29 carbon atoms, and combinations thereof,
- m, p and q: are the same or different and are independently 2 or 3 or mixtures thereof, and preferably are 2,
- x, y and z: are the same or different and are independently selected from integer numbers from 1 to 200, and

the average number of the sum of x + y + z of the glycerol ester alkoxylates of the formula (I) in the mixture (which is designated as variable "n") is greater than 5, preferably from 9 to 250, more preferably from 9 to 200, even more preferably from 20 to 175, and particularly preferably from 25 to 175,
characterized in that at least 25 wt.-%, preferably at least 50 wt.-%, more preferably at least 75 wt.-%, even more preferably at least 90 wt.-% and particularly preferably 100 wt.-% of all of the carbon atoms of the units -(CₘH₂ₘO), -(CₚH₂ₚO) and -(C_{q}H_{2q}O) in the glycerol ester alkoxylates of the formula (I) of the mixture, in each case based on the total weight of all of the carbon atoms of the units -(CₘH₂ₘO), -(CₚH₂ₚO) and -(C_{q}H_{2q}O) in the glycerol ester alkoxylates of the formula (I) of the mixture, are bio-based.

At least 25 wt.-%, preferably at least 50 wt.-%, more preferably at least 75 wt.-%, even more preferably at least 90 wt.-% and particularly preferably 100 wt.-% of all of the carbon atoms of the units -(CₘH₂ₘO), -(CₚH₂ₚO) and -(C_{q}H_{2q}O) in the glycerol ester alkoxylates of the formula (I) of the inventive mixture, in each case based on the total weight of all of the carbon atoms of the
units -(CₘH₂ₘO), -(CₚH₂ₚO) and -(C_{q}H_{2q}O) in the glycerol ester alkoxylates of the formula (I) of the inventive mixture, are bio-based. This means that the entirety of the units -(CₘH₂ₘO), -(CₚH₂ₚO) and -(C_{q}H_{2q}O) in the glycerol ester alkoxylates of the formula (I) of the inventive mixture has, on average, at least 25 wt.-%, preferably at least 50 wt.-%, more preferably at least 75 wt.-%, even more preferably at least 90 wt.-% and particularly preferably 100 wt.-% bio-based carbon content, in each case relative to the total mass of carbon in the entirety of the units -(CₘH₂ₘO), -(CₚH₂ₚO) and -(C_{q}H_{2q}O) in the glycerol ester alkoxylates of the formula (I) of the inventive mixture.

The inventive mixture of glycerol ester alkoxylates of the formula (I) can be applied in automatic dishwashing compositions. They may be used in these compositions in particular to provide a beneficial performance such as a beneficial rinse aid performance and/or a beneficial drying performance. They may also be used in these compositions to provide an advantageous cleanliness in the dishwashing machine and on dishes or to reduce fatty residues in the filter of a dishwashing machine.

The structural units of the formula -(CₘH₂ₘO)ₓ-, -(CₚH₂ₚO)_{y}- and -(C_{q}H_{2q}O)_{z}- in a single glycerol ester alkoxylate molecule of the formula (I), independently of each other, may consist of one or more (C₂H₄O)-groups, may consist of one or more (CsHsO)-groups or may consist of a mixture of (C₂H₄O)- and (C₃H₆O)-groups.

Within a single glycerol ester alkoxylate molecule of the formula (I), the structural units -(CₘH₂ₘO)ₓ, -(CₚH₂ₚO)_{y} and -(C_{q}H_{2q}O)_{z} may be the same or different.

The groups (C₂H₄O), if present in the structural units of the formula -(CₘH₂ₘO)ₓ-, -(CₚH₂ₚO)_{y}- and/or -(C_{q}H_{2q}O)_{z}- of the glycerol ester alkoxylates of the formula (I), preferably are of the formula -CH₂-CH₂-O-.

The groups (CsHsO), if present in the structural units of the formula -(CₘH₂ₘO)ₓ-, -(CₚH₂ₚO)_{y}- and/or -(C_{q}H_{2q}O)_{z}- of glycerol ester alkoxylates of the formula (I), preferably are of the formula -CH(CH₃)-CH₂-O-
or -CH₂-CH(CH₃)-O-, i.e. of the formula

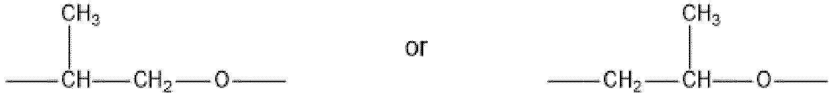

In the case that (C₂H₄O)- and (C₃H₆O)-groups exist in a structural unit of the formula -(CₘH₂ₘO)ₓ-, -(CₚH₂ₚO)_{y}- or -(C_{q}H_{2q}O)_{z}-, they may be arranged blockwise, alternating, periodically and/or statistically, preferably blockwise and/or statistically. This means that in a structural unit of the formula -(CₘH₂ₘO)ₓ-, -(CₚH₂ₚO)_{y}- or -(C_{q}H_{2q}O)_{z}-, the groups (C₂H₄O) and (C₃H₆O) may be arranged, for example, in a purely statistically or blockwise form but may also be arranged in a form which could be considered as both, statistical and blockwise, e.g. small blocks of (C₂H₄O) and (C₃H₆O) arranged in a statistical manner, or in a form wherein adjacent instances of statistical and blockwise arrangements of the groups (C₂H₄O) and (C₃H₆O) exist.

Any of the groups (C₂H₄O) and (CsHeO) can be linked
to -C(O)R₁, -C(O)R₂, -C(O)R₃ and an oxygen of the glycerol backbone in a glycerol ester alkoxylate molecule of the formula (I). This means, for example, that all, -C(O)R₁, -C(O)R₂, -C(O)R₃ and the oxygens of the glycerol backbone in a glycerol ester alkoxylate molecule of the formula (I), may be connected to a (C₂H₄O)-group, they may all be connected to a (C₃H₆O)-group or they may be connected independently from one another to either group selected from (C₂H₄O) and (C₃H₆O).

Glycerol ester alkoxylates are already known in the prior art. Glycerol ester ethoxylates of the prior art are e. g. described in WO 2020/239760 A1, WO 2020/239750 A1 or WO 2023/057335 A1.

Glycerol ester alkoxylates may be produced by the reaction of glycerol ester such as triglyceride with alkylene oxide e.g. using catalysts based on calcium or magnesium. The catalyst may be removed or left in the glycerol ester alkoxylate. An alternative route to prepare glycerol ester alkoxylates is a transesterification reaction of a methyl ester or esterification reaction of a carboxylic acid with an alkoxylated glycerol.

Bio-based glycerol ester alkoxylates of formula (I) can, for example, be prepared from (i) triglyceride and (ii) ethylene oxide, propylene oxide or mixtures of ethylene oxide and propylene oxide, wherein at least a part of one of the aforementioned alkylene oxides is bio-based.

Bio-based ethylene oxide can be obtained from bio-ethanol, which can be obtained from natural sources like corn, sugarcane, or cellulosic biomass through fermentation. Bio-ethanol is then dehydrated to produce bio-ethylene. The bio-ethylene is then oxidized with oxygen over a silver catalyst to produce bio-based ethylene oxide.

Bio-based propylene oxide can be obtained from
1) bio-glycerol, which can be obtained from biodiesel production, hydrolysis of vegetable oils, or fermentation of sugars. Bio-glycerol is then converted to acrolein via dehydration. Acrolein is hydrogenated to produce bio-propanol and subsequently dehydrated to provide bio-propylene, which is epoxidized to produce propylene oxide using hydrogen peroxide; or
2) bio-ethanol, which can be obtained from natural sources like corn, sugarcane, or cellulosic biomass through fermentation. Bio-ethanol is then dehydrated to produce bio-ethylene. The bio-ethylene is then catalytically dimerized to bio-butene. Bio-butene and bio-ethylene are then converted to bio-propylene via metathesis. The bio-propylene is then catalytically converted to propylene oxide.

The alkoxylated glycerol can also be prepared using ethylene oxide, propylene oxide or mixtures of ethylene oxide and propylene oxide, wherein at least a part of one of the aforementioned alkylene oxides is bio-based.

Triglycerides are not particularly limited and may be natural triglycerides or synthetic triglycerides. Preferably, the triglycerides used for the preparation of the inventive mixtures of glycerol ester alkoxylates of the formula (I) are not admixed with other reactants that contain any free hydroxyl groups.

Preferably, R₁, R₂ and R₃ are the same or different and are independently selected from the group consisting of linear or branched, preferably linear, saturated alkyl groups with 7 to 21 carbon atoms, linear or branched, preferably linear, mono- or polyunsaturated alkenyl groups with 7 to 21 carbon atoms, and combinations thereof, more preferably consisting of linear or branched, preferably linear, saturated alkyl groups with 11 to 19 carbon atoms, linear or branched, preferably linear, mono- or polyunsaturated alkenyl groups with 11 to 19 carbon atoms, and combinations thereof, and even more preferably consisting of linear or branched, preferably linear, saturated alkyl groups with 11 to 17 carbon atoms, linear or branched, preferably linear, mono- or polyunsaturated alkenyl groups with 11 to 17 carbon atoms, and combinations thereof.

Examples of the alkyl and alkenyl groups R₁, R₂ and R₃ in the formula (I) are, independently from each other, heptyl, octyl, nonyl, decyl, undecyl, dodecyl, tridecyl, tetradecyl, pentadecyl, hexadecyl, heptadecyl, octadecyl, nonadecyl, icosyl, henicosyl, docosyl, tricosyl, tetraicosyl, pentaicosyl, hexaicosyl, heptaicosyl, octaicosyl, nonaicosyl, heptenyl, octenyl, nonenyl, decenyl, dodecenyl, tetradecenyl, hexadecenyl, octadecenyl, octadecadienyl, octadecatrienyl, eicosenyl, eicosadienyl, eicosatetraenyl, docosenyl, docosahexaenyl, tetracosenyl, or mixtures thereof.

Examples of triglycerides are whale oil, animal fat, e.g. tallow fat, palm oil, palm kernel oil, coconut oil, olive oil, cottonseed oil, soybean oil, peanut oil, rapeseed oil, sunflower oil, castor oil, maize oil, and non-edible vegetable oils. Triglycerides may also be obtained from algae, fungi, yeast or bacteria.

The variables x, y, and z are the same or different and are independently an integer number for each single glycerol ester alkoxylate molecule of the formula (I) in the mixture according to the invention and may be the same or different for the various glycerol ester alkoxylate molecules in the mixture according to the invention. Preferably, x, y, and z are the same or different and are each independently selected from integer numbers from 1 to 150, more preferably from 1 to 100, even more preferably from 1 to 75, particularly preferably from 3 to 70, extraordinarily preferably from 5 to 65 and especially preferably from 5 to 60.

The mixture according to the invention may occur together with starting material used for its preparation, in particular triglyceride in case the inventive mixture is prepared by alkoxylation of triglycerides (in the following referred to as "composition A"). In case triglyceride is present in the compositions A, the triglyceride may be present in an amount of 0.1 wt.-% or more, or 0.5 wt.-% or more, or 1 wt.-% or more, or 2 wt.-% or more, in each case based on the total weight of the composition A. In case triglyceride is present in the compositions A, the triglyceride is present in an amount of preferably less than 50 wt.-%, more preferably less than 25.0 wt.-%, even more preferably less than 5.0 wt.-%, particularly preferably less than 2.0 wt.-% and extraordinarily preferably less than 1.0 wt.-%, in each case based on the total weight of the composition A.

During the preparation of the mixture according to the invention, by-products may be formed. The formation of by-products in chemical reactions is quite normal since these reactions usually do not take place with a selectivity of 100 %. However, in case by-products are formed during the preparation of the mixture according to the invention, these by-products are formed in an amount of preferably less than 55.0 wt.-%, more preferably less than 30.0 wt.-%, even more preferably less than 20.0 wt.-%, particularly preferably less than 15.0 wt.-%, extraordinarily preferably less than 10.0 wt.-% and especially preferably less than 5.0 wt.-%, in each case based on the combined total weight of the mixture according to the invention and the by-products, and in particular in case the inventive mixture is prepared by a method according to the invention.

In a preferred embodiment, starting material, and in particular triglyceride, occurring together with the mixture according to the invention is considered to form part of the by-products.

Furthermore, the mixture according to the invention may be purified after its preparation and prior to its use, e.g. by distilling, stripping or filtering-off by-products, but in a preferred embodiment, the mixture may be used as obtained without prior purification.

The mixture according to the invention may advantageously be prepared by alkoxylation of triglycerides using a special alkaline earth metal catalyst.

A further subject matter of the invention is a method for preparing a mixture of glycerol ester alkoxylates of the formula (I) according to the invention, 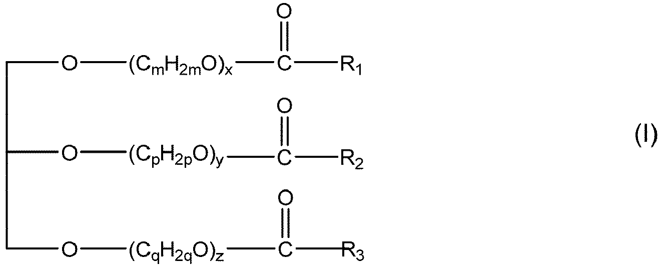
wherein R₁, R₂, R₃, m, p, q, x, y, and z in formula (I), and the average number of the sum of x + y + z of the glycerol ester alkoxylates of the formula (I) in the mixture according to the invention are as defined above,
from ethylene oxide, propylene oxide or a mixture of ethylene oxide and propylene oxide and one or more glycerol esters of the formula (II) 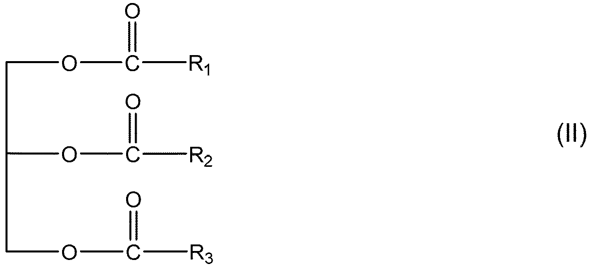 wherein R₁, R₂, and R₃ in formula (II) have the same meaning as in formula (I), and wherein in the method a catalyst (C) based on an alkaline earth metal is used and at least 25 wt.-%, preferably at least 50 wt.-%, more preferably at least 75 wt.-%, even more preferably at least 90 wt.-% and particularly preferably 100 wt.-% of the carbon atoms of the ethylene oxide, of the propylene oxide or of the mixture of ethylene oxide and propylene oxide used for the preparation of the mixture of glycerol ester alkoxylates of the formula (I), in each case based on the total weight of the carbon atoms of the ethylene oxide, of the propylene oxide or of the mixture of ethylene oxide and propylene oxide used for the preparation of the mixture of glycerol ester alkoxylates of the formula (I), are bio-based.

In the inventive method of preparation, at least 25 wt.-%, preferably at least 50 wt.-%, more preferably at least 75 wt.-%, even more preferably at least 90 wt.-% and particularly preferably 100 wt.-% of the carbon atoms of the ethylene oxide, of the propylene oxide or of the mixture of ethylene oxide and propylene oxide used for the preparation of the mixture of glycerol ester alkoxylates of the formula (I), in each case based on the total weight of the carbon atoms of the ethylene oxide, of the propylene oxide or of the mixture of ethylene oxide and propylene oxide used for the preparation of the mixture of glycerol ester alkoxylates of the formula (I), are bio-based. This means that the ethylene oxide, the propylene oxide or the mixture of ethylene oxide and propylene oxide used for the preparation of the mixture of glycerol ester alkoxylates of the formula (I) has, on average, at least 25 wt.-%, preferably at least 50 wt.-%, more preferably at least 75 wt.-%, even more preferably at least 90 wt.-% and particularly preferably 100 wt.-% bio-based carbon content, in each case relative to the total mass of carbon in the ethylene oxide, the propylene oxide or the mixture of ethylene oxide and propylene oxide used for the preparation of the mixture of glycerol ester alkoxylates of the formula (I).

Preferably, the triglycerides of the formula (II) used for the preparation of the inventive mixtures of glycerol ester alkoxylates of the formula (I) are not admixed with other reactants that contain any free hydroxyl groups.

Preferably, in the method according to the invention, the catalyst (C) is obtainable by a reaction involving
(a) an alkaline earth metal compound (A) and
(b) one or more substances selected from the group consisting of a carboxylic acid (B) preferably comprising 3 to 60, more preferably 3 to 46, carbon atoms; a polyalkylene glycol having a molecular weight from 100 g/mol to 1500 g/mol; a C₁-C₁₈ alkyl-capped polyalkylene glycol having a molecular weight from 100 g/mol to 1500 g/mol; an alcohol solvent; and mixtures including any of the foregoing, and
(c) a strong acid (AC).

The carboxylic acid (B) mentioned under component (b) above may e. g. be a carboxylic acid, wherein the carboxylic acid function -COOH is connected to a hydrocarbon group but may also e. g. be a carboxylic acid wherein the carboxylic acid function -COOH is connected to a hydrocarbon group that contains or is interrupted by ether functions.

The alcohol mentioned in component (b) is an alcohol wherein the hydroxyl function -OH is bonded to a hydrocarbyl group.

Preferably, in the method according to the invention, the alcohol solvent is an alcohol solvent having 1 to 5 carbon atoms, more preferably propan-2-ol, or a mixture thereof with water.

Preferably, in the method according to the invention the alkaline earth metal compound (A) is selected from the group consisting of magnesium hydroxide, magnesium acetate, magnesium carbonate, magnesium sulfate, magnesium phosphate, calcium hydroxide, calcium acetate, calcium carbonate, calcium sulfate, calcium phosphate, strontium hydroxide, strontium acetate, strontium carbonate, strontium sulfate, strontium phosphate, barium hydroxide, barium acetate, barium carbonate, barium sulfate, and barium phosphate. In a more preferred embodiment of the method according to the invention the alkaline earth metal compound (A) is selected from the group consisting of calcium hydroxide, calcium acetate, calcium carbonate, calcium sulfate, and calcium phosphate. In another more preferred embodiment of the method according to the invention the alkaline earth metal compound (A) is selected from the group consisting of magnesium hydroxide, magnesium acetate, calcium hydroxide, calcium acetate, strontium hydroxide, strontium acetate, barium hydroxide, and barium acetate. Particularly preferably, in the method according to the invention the alkaline earth metal compound (A) is selected from the group consisting of calcium acetate and calcium hydroxide.

Preferably, in the method according to the invention, the strong acid (AC) is an acid which has a pK_{A} value of 3 or less, more preferably is selected from the group consisting of acids of sulfur oxides and phosphorus oxides, even more preferably from the group consisting of sulfuric acid, sulfurous acid, sulfonic acids (among the sulfonic acids methane sulfonic acid is preferred), phosphorus acid, phosphorous acid and phosphonic acids (among the phosphonic acids methane phosphonic acid is preferred) and particularly preferably from the group consisting of sulfuric acid, sulfurous acid and methane sulfonic acid. Extraordinarily preferably, in the method according to the invention, the strong acid (AC) is sulfuric acid.

Preferably, in the method according to the invention, the molar ratio of the alkaline earth metal compound (A) to the strong acid (AC) is from 1.0:0.1 to 1.0:1.0, more preferably from 1.0:0.2 to 1.0:0.9 and even more preferably from 1.0:0.3 to 1.0:0.8. Preferably, in the method according to the invention, the polyalkylene glycol having a molecular weight from 100 g/mol to 1500 g/mol is a polyethylene glycol having a molecular weight from 100 g/mol to 1500 g/mol.

Preferably, in the method according to the invention, the C₁-C₁₈ alkyl-capped polyalkylene glycol having a molecular weight from 100 g/mol to 1500 g/mol is a methyl-capped polyalkylene glycol having a molecular weight from 100 g/mol to 1500 g/mol and more preferably is a methyl-capped polyethylene glycol having a molecular weight from 100 g/mol to 1500 g/mol.

Preferably, in the method according to the invention, volatile components are removed before the catalyst (C) is used for the preparation of the mixture of glycerol ester alkoxylates of the formula (I).

In one preferred embodiment of the method according to the invention, a carboxylic acid (B) is used in the preparation of the catalyst (C).

Preferably, in the method according to the invention, the molar ratio of alkaline earth metal compound (A) to carboxylic acid (B) in the preparation of the catalyst (C) is from 1:1 to 1:5.

Preferably, the carboxylic acid (B) is represented by formula (III),

R⁴-[O]_{q}-[CH₂CH₂-O]ₚ-CH₂COOH (III)

wherein
- R⁴: is selected from saturated or unsaturated, linear or branched C₁ to C₃₀ hydrocarbyl groups, preferably C₁ to C₂₂ hydrocarbyl groups, and more preferably C₆ to C₁₈ hydrocarbyl groups,
- q: is 0 or 1, and
- p: is, based on molar average, a number from 0 to 11, preferably from 1 to 11, more preferably from 1 to 9, and even more preferably from 2 to 7.

In a more preferred embodiment of the invention the carboxylic acid (B) is represented by formula (III),

R⁴-[O]_{q}-[CH₂CH₂-O]ₚ-CH₂COOH (III)

wherein
- R⁴: is selected from saturated or unsaturated, linear or branched C₁ to C₃₀ hydrocarbyl groups, preferably C₁ to C₂₂ hydrocarbyl groups, and more preferably C₆ to C₁₈ hydrocarbyl groups,
- q: is 0, and
- p: is 0, and
preferably is isononanoic acid or oleic acid.

In another more preferred embodiment of the invention the carboxylic acid (B) is represented by formula (III),

R⁴-[O]_{q}-[CH₂CH₂-O]ₚ-CH₂COOH (III)

wherein
- R⁴: is selected from saturated or unsaturated, linear or branched C₁ to C₃₀ hydrocarbyl groups, preferably C₁ to C₂₂ hydrocarbyl groups, and more preferably C₆ to C₁₈ hydrocarbyl groups,
- q: is 1, and
- p: is, based on molar average, a number from 0 to 11, preferably from 1 to 11, more preferably from 1 to 9, and even more preferably from 2 to 7, and
preferably, R⁴ is oleyl, q is 1, and p is, based on molar average, 5.

In one preferred embodiment of the invention, the catalyst (C) is obtainable by a reaction involving
(a) calcium hydroxide and
(b) a carboxylic acid (B), which is represented by formula (III),

   R⁴-[O]_{q}-[CH₂CH₂-O]ₚ-CH₂COOH (III)

   wherein
   - R⁴: is selected from saturated or unsaturated, linear or branched C₁ to C₃₀ hydrocarbyl groups, preferably C₁ to C₂₂ hydrocarbyl groups, and more preferably C₆ to C₁₈ hydrocarbyl groups,
   - q: is 0, and
   - p: is 0,

   and preferably is isononanoic acid, and
   an alcohol solvent, preferably an alcohol solvent having 1 to 5 carbon atoms, more preferably propan-2-ol, or a mixture thereof with water, and
(c) sulfuric acid.

In another preferred embodiment of the invention, the catalyst (C) is obtainable by a reaction involving
(a) calcium hydroxide and
(b) a carboxylic acid (B), which is represented by formula (III),

   R⁴-[O]_{q}-[CH₂CH₂-O]ₚ-CH₂COOH (III)

   wherein
   - R⁴: is selected from saturated or unsaturated, linear or branched C₁ to C₃₀ hydrocarbyl groups, preferably C₁ to C₂₂ hydrocarbyl groups, and more preferably C₆ to C₁₈ hydrocarbyl groups,
   - q: is 1, and
   - p: is, based on molar average, a number from 0 to 11, preferably from 1 to 11, more preferably from 1 to 9, and even more preferably from 2 to 7, and

   preferably, R⁴ is oleyl, q is 1, and p is, based on molar average, 5, and
   an alcohol solvent, preferably an alcohol solvent having 1 to 5 carbon atoms, more preferably propan-2-ol, or a mixture thereof with water, and
(c) a strong acid and preferably sulfuric acid.

In another preferred embodiment of the invention, the catalyst (C) is obtainable by a reaction involving
(a) calcium acetate and
(b) a polyalkylene glycol having a molecular weight from 100 g/mol to 1500 g/mol or mixtures of such polyalkylene glycols, and
(c) sulfuric acid.

In another preferred embodiment of the invention, the catalyst (C) is obtainable by a reaction involving
(a) calcium acetate and
(b) a carboxylic acid (B), which is represented by formula (III),

   R⁴-[O]_{q}-[CH₂CH₂-O]ₚ-CH₂COOH (III)

   wherein
   - R⁴: is selected from saturated or unsaturated, linear or branched C₁ to C₃₀ hydrocarbyl groups, preferably C₁ to C₂₂ hydrocarbyl groups, and more preferably C₆ to C₁₈ hydrocarbyl groups,
   - q: is 0, and
   - p: is 0, and

   preferably, is oleic acid, and
   a C₁-C₁₈ alkyl-capped polyalkylene glycol having a molecular weight from 100 g/mol to 1500 g/mol, preferably a methyl-capped polyalkylene glycol having a molecular weight from 100 g/mol to 1500 g/mol and more preferably a methyl-capped polyethylene glycol having a molecular weight from 100 g/mol to 1500 g/mol or mixtures of such alkyl-capped polyalkylene glycols, and
(c) sulfuric acid.

In another preferred embodiment of the invention, the catalyst (C) is obtainable by a reaction involving
(a) calcium acetate and
(b) an alcohol solvent, preferably an alcohol solvent having 1 to 5 carbon atoms, more preferably propan-2-ol, or a mixture thereof with water, and
(c) sulfuric acid.

In the inventive method for preparing the mixture of glycerol ester alkoxylates of the formula (I), the molar ratio of the alkylene oxide selected from the group consisting of ethylene oxide, propylene oxide and mixtures of ethylene oxide and propylene oxide to the one or more glycerol esters of the formula (II) preferably is greater than 5:1, more preferably from 9:1 to 250:1, even more preferably from 9:1 to 200:1, particularly preferably from 20:1 to 175:1 and extraordinarily preferably from 25:1 to 175:1.

The molar ratio of alkaline earth metal compound (A) to carboxylic acid (B) (molar ratio (A):(B)) in the preparation of the catalyst (C) preferably is from 1:1 to 1:5. More preferably, the molar ratio (A):(B) is from 1:1.5 to 1:4, even more preferably from 1:1.8 to 1:2.2 and particularly preferably from 1:1.9 to 1:2.1. In an extraordinarily preferred embodiment, the molar ratio of (A):(B) in the preparation of the catalyst (C) is approximately 1:2.

In one preferred embodiment, the reaction for the preparation of the catalyst (C) is carried out in the presence of at least one polar solvent, more preferably a polar solvent comprising at least one hydroxyl group, even more preferably at least one alcohol having 1 to 5 carbon atoms or a mixture thereof with water. In a particularly preferred embodiment, the polar solvent is propan-2-ol or a mixture thereof with water. In another particularly preferred embodiment, the polar solvent is ethanol or a mixture thereof with water.

It is advisable to perform the reaction for obtaining the catalyst (C) in the presence of an acid (AC) which has a pK_{A} value of 3 or less, preferably 2 or less, more preferably 0 or less, and often -3 or less.

Preferably, the acid (AC) is selected from the group consisting of acids of sulfur oxides and phosphorus oxides, more preferably from the group consisting of sulfuric acid, sulfurous acid, sulfonic acids (among the sulfonic acids methane sulfonic acid is preferred), phosphorus acid, phosphorous acid and phosphonic acids (among the phosphonic acids methane phosphonic acid is preferred). Sulfuric acid, sulfurous acid and methane sulfonic acid are of particular interest.

In a particularly preferred embodiment, the reaction for obtaining the catalyst (C) is performed in the presence of sulfuric acid.

It is particularly advantageous to prepare the alkaline earth metal catalyst (C) by first allowing the alkaline earth metal compound (A) to react with the carboxylic acid (B), preferably in a solvent as described above, after which the reaction mixture is further treated with the acid (AC).

It is also particularly advantageous to prepare the alkaline earth metal catalyst (C) by first dispersing the alkaline earth metal compound (A) in a polyalkylene glycol having a molecular weight from 100 g/mol to 1500 g/mol or mixtures of such polyalkylene glycols, or in a C₁-C₁₈ alkyl-capped polyalkylene glycol having a molecular weight from 100 g/mol to 1500 g/mol, preferably a methyl-capped polyalkylene glycol having a molecular weight from 100 g/mol to 1500 g/mol and more preferably a methyl-capped polyethylene glycol having a molecular weight from 100 g/mol to 1500 g/mol or mixtures of such alkyl-capped polyalkylene glycols, optionally in the presence of water, after which the reaction mixture is further treated with the acid (AC). The dispersing step may be performed in the presence of a carboxylic acid (B), which is represented by formula (III),

R⁴-[O]_{q}-[CH₂CH₂-O]ₚ-CH₂COOH (III)

wherein
- R⁴: is selected from saturated or unsaturated, linear or branched C₁ to C₃₀ hydrocarbyl groups, preferably C₁ to C₂₂ hydrocarbyl groups, and more preferably C₆ to C₁₈ hydrocarbyl groups,
- q: is 0, and
- p: is 0, and
preferably is oleic acid.

It is also particularly advantageous to prepare the alkaline earth metal catalyst (C) by first dispersing the alkaline earth metal compound (A) in an alcohol solvent, preferably an alcohol solvent having 1 to 5 carbon atoms, more preferably propan-2-ol, or a mixture thereof with water, after which the reaction mixture is further treated with the acid (AC).

For the reaction by which the alkaline earth metal catalyst (C) is obtained, any common reactor may be employed, preferably a reactor with an agitating/mixing means, such as, e.g., a magnetic stirrer, a mechanical stirrer, a static mixer, a blender, a batch disperser, or a Rotor-Stator disperser.

The preparation of the catalyst (C) is preferably carried out under a pressure of from 0.5 to 2 bar, more preferably from 0.8 to 1.5 bar, even more preferably from 0.9 to 1.2 bar. In a preferred embodiment, the catalyst is prepared under atmospheric pressure. Furthermore, the catalyst (C) is preferably prepared at a temperature of from -30 °C to 80 °C, preferably from -10 °C to 60 °C, more preferably from 0 °C to 50 °C. In a preferred embodiment, the catalyst is prepared at a temperature of from 20 to 40 °C, especially at room temperature.

The thus prepared alkaline earth metal catalyst (C), preferably the calcium catalyst, typically has a content of alkaline earth metal ions, preferably Ca²⁺ ions, that is from 0.5 to 10 wt.-%, often from 1 to 7 wt.-%, often from 2.0 to 5.5 wt.-%.

Optionally, the catalyst may be purged of volatile components, such as the solvent, water and other volatile byproducts by employing commonly used methods. Preferably, the volatile components are removed in vacuo, e.g. under a pressure below 0.8 bar, preferably below 0.3 bar, more preferably below 0.1 bar, and/or at elevated temperatures, e.g. 50 to 180 °C, preferably 70 to 150 °C, more preferably 80 to 140 °C.

In a particularly preferred embodiment, the volatile compounds are removed on a rotary evaporator at a pressure below 0.1 bar and a temperature of from 80 °C to 140 °C.

Preferably, the method of the invention for preparing a mixture of glycerol ester alkoxylates of the formula (I) according to the invention comprises the steps of
i) introducing the catalyst (C) as defined above and one or more glycerol esters of the formula (II) as described above into a pressure-resistant reactor;
ii) optionally replacing the air in the reactor with nitrogen or other protective gas;
iii) optionally drying the reactor content at a temperature of from 50 to 200 °C and/or a pressure below 0.8 bar;
iv) heating the content of the reactor to a temperature of from 80 °C to 200 °C;
v) optionally pressurizing the reactor with nitrogen or other protective gas to a pressure of from 0.3 bar to 3.5 bar above atmospheric pressure;
vi) pressurizing the reactor with alkylene oxide gas selected from the group consisting of ethylene oxide gas, propylene oxide gas and mixtures of ethylene oxide gas and propylene oxide gas to a pressure of from 1.5 bar to 10 bar above atmospheric pressure with the proviso that the pressure is above the pressure prior to step vi);
vii) allowing the mixture to react until the pressure in the reactor is constant.

In step i) the catalyst (C) may be introduced as obtained from the reaction of its preparation described above directly, or in its form that has been purged of volatile compounds, but preferably as obtained from the reaction of its preparation described above directly. The glycerol esters of formula (II) may be introduced in their raw form or may be purified prior to use.

The catalyst (C) is preferably introduced into the reactor in an amount from 0.5 to 5 wt.-%, preferably from 1 to 3 wt.-%, more preferably from 1 to 2 wt.-% based on the total weight of the mixture of glycerol esters of formula (II) and alkylene oxide selected from the group consisting of ethylene oxide, propylene oxide and mixtures of ethylene oxide and propylene oxide.

The pressure-resistant reactor is not particularly limited but is designed to withstand the pressures employed in the process, thus that it is not damaged during the process. Preferably, the reactor is designed to withstand pressures both above 10 bar, more preferably above 15 bar, and below 0.01 bar, more preferably below 0.001 bar. Preferably, the pressure-resistant reactor is an autoclave, more preferably an autoclave equipped with an agitating means such as a magnetic or a mechanical stirrer.

Generally, the replacement of air in the reactor with nitrogen or other protective gas is not necessarily required, because the mixture of glycerol ester alkoxylates of the formula (I) according to the invention would at least partially be generated in the process. However, air, particularly oxygen, in the reactor may lead to safety concerns during alkoxylation reactions in general and decomposition products due to oxidation and/or hydrolysis of the employed materials and of the generated products, especially at elevated temperatures. Therefore, it is advisable to carry out step ii) of the method of the invention after step i).

In general, the step of drying the reactor content is also not necessarily required, because the mixture of glycerol ester alkoxylates of the formula (I) according to the invention would at least partially be generated in the process. However, water and alcohols may facilitate hydrolysis and transesterification of the employed materials and of the generated products under the reaction conditions. Especially if in step i) the catalyst (C) is introduced into the reactor as obtained from the reaction of its preparation described above directly, it is advisable to carry out the drying step, since the directly obtained catalyst (C) typically contains residues of polar solvents or their mixtures with water. In case the catalyst (C) is purged of volatile components before introducing it into the reactor, the drying step iii) may be omitted. Nevertheless, in this case it may be advisable to carry out step iii) since volatile components may also be present as impurities in the one or more glycerol esters of formula (II). Therefore, in particularly preferred embodiments, step iii) is carried out.

The step iii) of drying the reactor content is typically performed at a temperature of from 50 °C to 200 °C, preferably of from 50 °C to 180 °C, more preferably of from 60 °C to 150 °C, even more preferably of from 70 °C to 130 °C, particularly preferably of from 80 °C to 120 °C, and at a pressure below 0.8 bar, preferably below 0.1 bar, more preferably below 0.05 bar. The thus generated vacuum is preferably a dynamic vacuum.

The vacuum pump for generating the vacuum is not particularly limited; it is, however, preferable to use an aspirator for generating the vacuum. Furthermore, it is advisable to reduce the pressure and increase temperature in the reactor gradually to prevent boiling retardation. In a particularly preferred embodiment, the step of drying the reactor content is carried out at a temperature of from 80 °C to 120 °C and a pressure below 0.01 bar, preferably over a period of at least 15 minutes, more preferably over a period of at least 30 minutes, even more preferably over a period of at least 1 hour. It is particularly preferred to dry the content of the reactor to constant mass.

After the drying step iii) the fluid line between the vacuum pump and the reactor is interrupted, to ensure that the components added to the reactor after the drying remain in the reactor and are not directly withdrawn therefrom. Furthermore, it is preferable to compensate the vacuum in the reactor with nitrogen or other protective gas before carrying out the further steps, to reduce the risk of air entering the reactor.

Step iv) of heating the content of the reactor is generally performed at a temperature of from 80 °C to 200 °C, preferably from 120 °C to 190 °C, more preferably from 160 °C to 180 °C. This temperature is maintained at least until step vi) is finished, preferably until step vii) is finished.

After setting the temperature in step iv), the reactor may be optionally pressurized in step v) with nitrogen or other protective gas to a pressure of from 0.3 to 3.5 bar, preferably of from 0.4 to 3.3 bar, more preferably of from 0.5 to 3.0 bar, even more preferably of from 0.7 to 2.5 bar and particularly preferably of from 0.8 to 2.2 bar above atmospheric pressure. By carrying out this step v), alkylene oxide selected from the group consisting of ethylene oxide, propylene oxide and mixtures of ethylene oxide and propylene oxide introduced in the following step is diluted with the protective gas, thus that pressure-controlled dosage of alkylene oxide into the reactor is facilitated.

In step vi) the reactor is further pressurized with alkylene oxide selected from the group consisting of ethylene oxide, propylene oxide and mixtures of ethylene oxide and propylene oxide to a total internal pressure of from 1.5 to 10 bar, preferably from 2 to 8 bar, more preferably from 3 to 6 bar, even more preferably from 4 to 5 bar, above atmospheric pressure, with the proviso that the pressure in step vi) is above the pressure before step vi).

During step vii), after introduction of the intended amount of alkylene oxide selected from the group consisting of ethylene oxide, propylene oxide and mixtures of ethylene oxide and propylene oxide, the alkylene oxide inlet is closed and the reaction is allowed to proceed until the pressure in the reactor is constant.

In the sense of the invention, the pressure is considered constant, if it does not change by more than 0.05 bar over a period of 15 minutes, preferably 30 minutes, more preferably 1 hour. It is particularly preferred that the pressure in the reactor does not change by more than 0.01 bar over a period of 1 hour.

After completion of step vii), it is advisable to remove residual alkylene oxide from the reactor before isolating the mixture of glycerol ester alkoxylates of the formula (I) according to the invention, in order to prevent any unwanted reactions with alkylene oxide from taking place after isolation of the product. Preferably, residual alkylene oxide is removed from the reactor by cooling the reactor content to a temperature of from 50 to 120 °C, more preferably from 70 to 100 °C and even more preferably from 85 to 95 °C, and employing a pressure of below 0.8 bar, preferably below 0.1 bar, more preferably below 0.05 bar. The thus generated vacuum is preferably a dynamic vacuum. The vacuum pump for generating the vacuum is not particularly limited; it is, however, preferable to use an aspirator for generating the vacuum. Removal of residual alkylene oxide under these conditions is preferably carried out for at least 10 minutes, more preferably at least 30 minutes and even more preferably at least 1 hour.

The method of isolation of the mixture of glycerol ester alkoxylates of the formula (I) according to the invention is not particularly limited. However, it is preferable to isolate the product at elevated temperatures, specifically at temperatures of from 50 to 150 °C, preferably from 60 to 140 °C, more preferably from 80 to 120 °C. At these temperatures the mixture of glycerol ester alkoxylates of the formula (I) according to the invention is typically in a liquid state and has a sufficiently low viscosity, and therefore may be transferred out of the reactor more easily than in the solid state, e.g. by pouring the product out of the reactor or via a bottom valve, thereby minimizing the amount of residues in the reactor. Thus, the subsequent cleaning and maintenance of the reactor is also facilitated.

The method for preparing a mixture of glycerol ester alkoxylates of the formula (I) according to the invention using the catalyst (C) described above may be interrupted at any stage, and continued at a later point in time, without the reaction time being significantly increased.

A further subject matter of the invention is an alkoxylation product obtainable by the inventive method described above for preparing a mixture according to the invention. The alkoxylation product comprises a mixture of glycerol ester alkoxylates of the formula (I) according to the invention and may optionally comprise further substances such as starting materials or reactants, in particular glycerol esters, and/or by-products.

Preferably, the materials used to prepare the inventive mixture of glycerol ester alkoxylates of the formula (I) or the inventive alkoxylation product are bio-based under the description above and derived from natural sources. More preferably, the inventive mixture of glycerol ester alkoxylates of the formula (I) or the inventive alkoxylation product has at least 25 wt.-%, preferably at least 50 wt.-%, more preferably at least 75 wt.-%, even more preferably at least 90 wt.-% and particularly preferably 100 wt.-% bio-based carbon content, in each case relative to the total mass of carbon in the mixture of glycerol ester alkoxylates of the formula (I) or relative to the total mass of carbon in the alkoxylation product, respectively.

Preferably, the hydroxyl number of the alkoxylation product according to the invention is smaller than 15 mg KOH/g, more preferably smaller than 10 mg KOH/g and even more preferably smaller than 5 mg KOH/g. The hydroxyl number is measured according to DIN EN ISO 4629-2.

In order to obtain mixtures or alkoxylation products of the invention having a desired bio-based carbon content, reactants with a respective bio-based carbon content may be used for their preparation.

In preferred embodiments, the bio-based carbon content as used herein is measured according to standard ASTM D6866-12, Method B. In preferred embodiments, the bio-based carbon content of the mixture of glycerol ester alkoxylates of formula (I) as used herein is measured according to standard ASTM D6866-12, Method B. In preferred embodiments, the bio-based carbon content of the alkoxylation product as used herein is measured according to standard ASTM D6866-12, Method B. In preferred embodiments, the bio-based carbon content of ethylene oxide, propylene oxide or mixtures of ethylene oxide and propylene oxide as used herein is measured according to standard ASTM D6866-12, Method B. In preferred embodiments, the bio-based carbon content of the mixture of glycerol esters of the formula (II) as used herein is measured according to standard ASTM D6866-12, Method B.

The "bio-based content" is reported in ASTM D6866-12, Method B (see section 3.3.9 of ASTM D6866-12). "Biobased carbon content", "bio-based carbon content", "biobased content", "bio-based content", "biogenic carbon content", "biomass-derived carbon" herein refer to the same thing and are all measured in wt.-%. Herein, the term "bio-based carbon content" is used. ASTM D6866-12, Method B lab results report the percentage of bio-based carbon content relative to total carbon, and not to total mass of the sample or molecular weight. A comment on bio-based carbon content calculation: ASTM D6866-12, Method B (see section 9 of ASTM D6866-12) requires the percent modern carbon value (pMC) reported to be multiplied by a correction factor of 0.95 to account for excess carbon-14 in the atmosphere due to nuclear weapons testing. Hence the term "bio-based carbon content" as used herein (if measured according to standard ASTM D6866-12, Method B) is defined by the equation: Bio-based carbon content = pMC * 0.95 (%)

In preferred embodiments, the bio-based carbon content as used herein is measured according to standard ASTM D6866-21, Method B. In preferred embodiments, the bio-based carbon content of the mixture of glycerol ester alkoxylates of formula (I) as used herein is measured according to standard ASTM D6866-21, Method B. In preferred embodiments, the bio-based carbon content of the alkoxylation product as used herein is measured according to standard ASTM D6866-21, Method B. In preferred embodiments, the bio-based carbon content of ethylene oxide, propylene oxide or mixtures of ethylene oxide and propylene oxide as used herein is measured according to standard ASTM D6866-21, Method B. In preferred embodiments, the bio-based carbon content of the mixture of glycerol esters of the formula (II) as used herein is measured according to standard ASTM D6866-21, Method B.

The "bio-based content" is reported in ASTM D6866-21, Method B. "Biobased carbon content", "bio-based carbon content", "biobased content", "bio-based content", "biogenic carbon content", "biomass-derived carbon" herein refer to the same thing and are all measured in wt.-%. Herein, the term "bio-based carbon content" is used. ASTM D6866-21, Method B lab results report the percentage of bio-based carbon content relative to total carbon, and not to total mass of the sample or molecular weight.

A review on measurement methods of bio-based carbon content for biomass-based chemicals and plastics is given by Massao Kunioka in Radioisotopes, 62, 901-925 (2013).

Bio-based products are part of the natural carbon cycle. If these products are incinerated or biodegraded, the quantity of carbon dioxide that is emitted corresponds to the quantity fixed by photosynthesis during biomass growth.

Details on the analytical procedure for determination of bio-based carbon content are given in the following.

The provided sample material does not undergo any pre-treatment procedure and is converted to graphite as is using the following procedure.

Depending on the estimated amount of carbon content, typically a few milligrams of sample material are combusted in an Elemental Analyzer (EA). The resulting gas mixture is cleaned and CO₂ is automatically separated by the EA using the purge and trap technology.

The remaining CO₂ is transferred into a graphitization system, preferably custom-made, converted into carbon (graphite) catalytically using H₂ and an iron-powder catalyst.

The carbon-14 determination of the graphite can be performed at the Klaus-Tschira-Archaeometrie-Center using an accelerator mass-spectrometer (AMS) of the type MICADAS (developed at the ETH Zurich, Switzerland).

The mixtures of alkoxylated glycerols, which underlie the mixture of glycerol ester alkoxylates of the formula (I), are the mixtures of alkoxylated glycerols of the formula (A1) 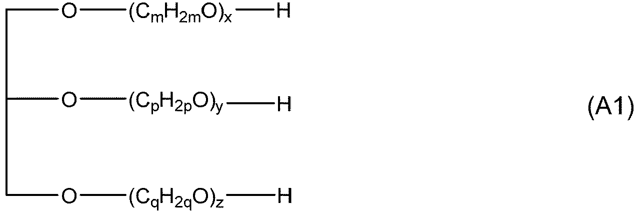 wherein m, p, q, x, y, z, and the average number of the sum of x + y + z have the meanings given above for the mixture of glycerol ester alkoxylates of the formula (I). These mixtures of alkoxylated glycerols of the formula (A1) can be obtained from the mixture of glycerol ester alkoxylates of the formula (I) by cleavage of the ester bonds using techniques known to the person skilled in the art such as saponification, in particular alkaline hydrolysis using aqueous sodium hydroxide.

In preferred embodiments, the bio-based carbon content of the mixture of alkoxylated glycerols of formula (A1) as used herein is measured according to standard ASTM D6866-12, Method B.

In preferred embodiments, the bio-based carbon content of the mixture of alkoxylated glycerols of formula (A1) as used herein is measured according to standard ASTM D6866-21, Method B.

The inventive mixture of glycerol ester alkoxylates of the formula (I) or the inventive alkoxylation product are at least partly prepared from renewable resources and thus are advantageous from an ecological point of view.

As already stated above, the inventive mixture of glycerol ester alkoxylates of the formula (I) can be applied in automatic dishwashing compositions.

Therefore, a further subject matter of the invention is an automatic dishwashing composition comprising the inventive mixture of glycerol ester alkoxylates of the formula (I) or the inventive alkoxylation product.

The amount of the inventive mixture of glycerol ester alkoxylates of the formula (I) or of the inventive alkoxylation product in the automatic dishwashing composition of the invention is preferably from 0.1 to 20% by weight, more preferably from 0.1 to 10.0% by weight and even more preferably from 0.3 to 8% by weight, in each case based on the total weight of the composition of the invention.

Automatic dishwashing compositions, their preparation and application are well-known in the art. Besides the mixture or the alkoxylation product according to the invention, automatic dishwashing compositions may comprise one or more optional ingredients, e. g. they may comprise conventional ingredients commonly used in automatic dishwashing compositions. Examples of optional ingredients include, but are not limited to surface-active agents, enzymes, builders, bleaching agents, surfactants, polymers, chelating agents, glass corrosion inhibitors, water, solvents other than water, thickeners, foaming inhibitors, color particles, silver protecting agents, agents for preventing the tarnishing of silver, corrosion inhibitors, colorants, fillers, germicidal agents, hydrotropic agents, antioxidants, enzyme stabilizers, perfumes, solubilizers, carriers, processing aids, pigments and pH regulators.

Optional ingredients that may be contained in the automatic dishwashing compositions are e. g. described in WO 2023/052542 A1 or in WO 2023/057335 A1.

As already stated above, the inventive mixture of glycerol ester alkoxylates of the formula (I) or the inventive alkoxylation product may be used, e.g. in the inventive compositions, in particular to provide a beneficial performance such as a beneficial rinse aid performance and/or a beneficial drying performance, but also to provide an advantageous cleanliness in the dishwashing machine and on dishes or to reduce fatty residues in the filter of a dishwashing machine.

Therefore, a further subject matter of the invention is the use of the inventive mixture of glycerol ester alkoxylates of the formula (I) or of the inventive alkoxylation product, preferably in the inventive compositions, to provide a beneficial performance such as a beneficial rinse aid performance and/or a beneficial drying performance, or to provide an advantageous cleanliness in the dishwashing machine and on dishes or to reduce fatty residues in the filter of a dishwashing machine.

The present invention relates
to the above-described specific mixtures of glycerol ester alkoxylates of the formula (I), wherein at least 25 wt.-%, preferably at least 50 wt.-%, more preferably at least 75 wt.-%, even more preferably at least 90 wt.-% and particularly preferably 100 wt.-% of all of the carbon atoms of the units -(CₘH₂ₘO), -(CₚH₂ₚO) and -(C_{q}H_{2q}O) in the glycerol ester alkoxylates of the formula (I) of the mixture, in each case based on the total weight of all of the carbon atoms of the units -(CₘH₂ₘO), -(CₚH₂ₚO) and -(C_{q}H_{2q}O) in the glycerol ester alkoxylates of the formula (I) of the mixture, are bio-based;
to a method for their preparation;
to alkoxylation products obtainable by this preparation method;
to automatic dishwashing compositions comprising the mixtures of glycerol ester alkoxylates or the alkoxylation products; and
to specific uses of the mixtures of glycerol ester alkoxylates of the formula (I) or of the alkoxylation products.

These mixtures, preparation methods, alkoxylation products, compositions, and uses are hereinafter referred to as "bio-based mixtures", "bio-based preparation methods", "bio-based alkoxylation products", "bio-based compositions", and "bio-based uses".

Further disclosed are
mixtures, which are similar to the bio-based mixtures, with the sole difference that the carbon atoms of the units -(CₘH₂ₘO), -(CₚH₂ₚO) and -(C_{q}H_{2q}O) in the glycerol ester alkoxylates of the formula (I) are not bio-based (hereinafter referred to as "mixtures N");
a method for the preparation of mixtures N, which is similar to the above-described method for preparing the bio-based mixtures, with the sole difference that the carbon atoms of the ethylene oxide, of the propylene oxide or of the mixtures of ethylene oxide and propylene oxide used for the preparation of mixtures N are not bio-based (hereinafter referred to as "preparation method N");
alkoxylation products obtainable by the preparation method N (hereinafter referred to as "alkoxylation products N");
automatic dishwashing compositions comprising the mixtures N or the alkoxylation products N instead of the bio-based mixtures or the bio-based alkoxylation products (hereinafter referred to as "compositions N"); and
uses, which are similar to the bio-based uses, with the sole difference that the mixtures N or the alkoxylation products N are employed in these uses instead of the bio-based mixtures or the bio-based alkoxylation products (hereinafter referred to as "uses N").

The preferred embodiments described above for the "bio-based mixtures", "bio-based preparation methods", "bio-based alkoxylation products", "bio-based compositions", and "bio-based uses" apply analogously to mixtures N, preparation method N, alkoxylation products N, compositions N, and uses N.

The examples below are intended to illustrate the invention in detail without, however, limiting it thereto.

### EXAMPLES

Key to abbreviations used:
- EO: Ethylene oxide or a unit -(CH₂CH₂O)
- HEDP: 1-Hydroxyethane-1,1-diphosphonic acid
- MGDA: Methylglycine-diacetic acid
- Polyglykol 1000: Polyethylene glycol with an average molecular weight of 1000 g/mol
- TAED: Tetraacetylethylenediamine
- wt.-%: % by weight

### Synthesis example 1

Methods of preparation of catalyst (C) with carboxylic acid of formula (III)
a) A mixture of 1047.0 g of a carboxylic acid of formula (III) under the trademark Emulsogen^{™} COL 050 marketed by Clariant, 55.8 g of calcium hydroxide and 360.6 g of propan-2-ol is agitated at ambient temperature for 5 minutes with a batch disperser (Ultra Turrax from IKA Werke GmbH & Co KG). After this, 44.2 g of concentrated sulfuric acid are added over 2 minutes and the mixture is again agitated for 5 minutes with the batch disperser, providing a catalyst with a Ca²⁺ content of 2.00 wt.-%.
b) A mixture of 1047.0 g of a carboxylic acid of formula (III) under the trademark Emulsogen^{™} COL 050 marketed by Clariant, 55.8 g of calcium hydroxide and 360.6 g of propan-2-ol is agitated at ambient temperature for 5 minutes with a batch disperser (Ultra Turrax from IKA Werke GmbH & Co KG). After this, 42.9 g of methanesulfonic acid (99 wt.-%) are added over 2 minutes and the mixture is again agitated for 5 minutes with the batch disperser, providing a catalyst with a Ca²⁺ content of 2.00 wt.-%.
c) A mixture of 1047.0 g of a carboxylic acid of formula (III) under the trademark Emulsogen^{™} COL 050 marketed by Clariant, 55.8 g of calcium hydroxide and 360.6 g of propan-2-ol is agitated at ambient temperature for 5 minutes with a batch disperser (Ultra Turrax from IKA Werke GmbH & Co KG). After this, 603.7 g of sulfurous acid (6 wt.-%) are added over two minutes and the mixture is again agitated for 5 minutes with the batch disperser. The solvent mixture is removed under vacuum, providing a catalyst with a Ca²⁺ content of approximately 2 wt.-%.
   Emulsogen^{™} COL 050 is a commercial product carboxylic acid (B) comprising, as main component, a carboxylic acid represented by formula (III) wherein R⁴ is oleyl, q is 1, and p is, based on molar average, 5.
d) A mixture of 622.0 g iso-nonanoic acid, 1922.4 g of propan-2-ol and 147.6 g water is dispersed for 1 minute with a Rotor-Stator disperser. 148.2 g of calcium hydroxide are added within 30 minutes. After this, 60.05 g of concentrated sulfuric acid are added within 5 minutes and the mixture is again dispersed for 120 minutes, providing a catalyst with a Ca²⁺ content of 2.75 wt.-%.
   Further catalysts are prepared according to synthesis example 1 d) but with the sole difference that 72.06 g of concentrated sulfuric acid are used or that 84.07 g of concentrated sulfuric acid are used or that 96.09 g of concentrated sulfuric acid are used.

Method of preparation of catalyst (C) with a polyalkylene glycol
e) A mixture of 1500 g of polyalkylene glycol (Polyglykol 1000) and 270.1 g of calcium acetate monohydrate is agitated with a lab disperser. After this, 165 g of concentrated sulfuric acid (98%) are added and the mixture is again agitated with the lab disperser to yield the final catalyst with a Ca²⁺ content of 3.1 wt.-%.

Method of preparation of catalyst (C) with a methyl-capped polyalkylene glycol and a carboxylic acid (B)
f) A mixture of 350 g of methyl-capped polyethylene glycol with an average molecular weight of 350 g/mol, 240 g of calcium acetate monohydrate, and 350 g of oleic acid is agitated with a lab disperser. After this, 60 g of concentrated sulfuric acid (98%) is added and the mixture is again agitated with the lab disperser to yield the final catalyst with a Ca²⁺ content of 5.5 wt.-%.

Method of preparation of catalyst (C) with an alcohol solvent
g) A mixture of 525 g of isopropanol and 150 g of calcium acetate monohydrate is agitated with a lab disperser. After this, 75 g of concentrated sulfuric acid (98%) is added and the mixture is again agitated with the lab disperser to yield the final catalyst with a Ca²⁺ content of 4.6 wt.-%.

### Synthesis example 2

General procedure for the preparation of mixtures of glycerol ester alkoxylates of the formula (I):
The glycerol ester of the formula (II) and the catalyst are placed into a glass autoclave, which is then flushed with nitrogen by alternatingly applying vacuum and introducing nitrogen (3 cycles). The mixture is dried under aspirator vacuum at 100 °C for 1 hour. The pressure in the autoclave is restored to ambient pressure with nitrogen and heated to 170 °C. At this temperature the autoclave is pressurized with nitrogen to a pressure of 2.0 bar above atmospheric pressure, after which pressure-controlled dosage of alkylene oxide selected from the group consisting of ethylene oxide, propylene oxide and mixtures of ethylene oxide and propylene oxide takes place up to a maximum pressure of 4.5 bar above atmospheric pressure.

The alkoxylation is carried out in a semi-batch process with automated dosage of alkylene oxide selected from the group consisting of ethylene oxide, propylene oxide and mixtures of ethylene oxide and propylene oxide within a given temperature window and up to the specified maximum pressure. The pressure is adjusted according to the increased filling volume of the vessel. After introduction of the intended amount of alkylene oxide and closing the alkylene oxide inlet, the reaction is continued until the pressure becomes constant.

The reactor content is cooled to 90 °C and aspirator vacuum is applied for 30 minutes in order to remove residual alkylene oxide. The temperature is reduced to 80 °C and the final product is transferred into storage vessels and analyzed. A typical batch scale is 400 g to 2000 g. The uptake of the intended amount of alkylene oxide can be assured by gravimetry and by determination of the saponification value according to DIN EN ISO 3681.

In the following, an example for a composition is given.

**Table A Automatic dishwashing composition**

| Component | amount [wt.-%] *⁾ |
|---|---|
| Trisodium citrate dihydrate | 30.0 |
| Sodium carbonate | 35.0 |
| Sodium silicate | 2.0 |
| MGDA-Na₃ | 0.4 |
| Sodium hydrogen carbonate | 1.3 |
| Polycarboxylate | 5.0 |
| Sodium percarbonate | 14.0 |
| TAED | 2.0 |
| HEDP | 1.5 |
| Protease | 0.4 |
| Amylase | 0.3 |
| Modified fatty alcohol ethoxylate Iso-C₁₁H₂₃-O-(EO)₂₁-CH₂-CH(OH)-n-C₁₀H₂₁ | 4.0 |
| Ethoxylated triglyceride oil Coconut oil + 45 EO ¹⁾ | 2.0 |
| Sodium sulfate | 2.1 |

| | |
|---|---|
| *⁾ The ingredients are added according to their active component content in wt.-%. ¹⁾ EO: 100 wt.-% bio-based carbon content | |

## Claims

1. Mixture of glycerol ester alkoxylates of the formula (I) 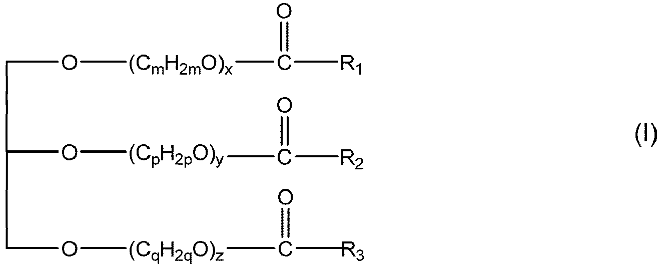 wherein
R₁, R₂ and R₃ are the same or different and are independently selected from the group consisting of linear or branched, preferably linear, saturated alkyl groups with 7 to 29 carbon atoms, linear or branched, preferably linear, mono- or polyunsaturated alkenyl groups with 7 to 29 carbon atoms, and combinations thereof,
m, p and q are the same or different and are independently 2 or 3 or mixtures thereof, and preferably are 2,
x, y and z are the same or different and are independently selected from integer numbers from 1 to 200, and
the average number of the sum of x + y + z of the glycerol ester alkoxylates of the formula (I) in the mixture (which is designated as variable "n") is greater than 5, preferably from 9 to 250, more preferably from 9 to 200, even more preferably from 20 to 175, and particularly preferably from 25 to 175,
**characterized in that** at least 25 wt.-%, preferably at least 50 wt.-%, more preferably at least 75 wt.-%, even more preferably at least 90 wt.-% and particularly preferably 100 wt.-% of all of the carbon atoms of the units -(CₘH₂ₘO), -(CₚH₂ₚO) and -(C_{q}H_{2q}O) in the glycerol ester alkoxylates of the formula (I) of the mixture, in each case based on the total weight of all of the carbon atoms of the units -(CₘH₂ₘO), -(CₚH₂ₚO) and -(C_{q}H_{2q}O) in the glycerol ester alkoxylates of the formula (I) of the mixture, are bio-based.

2. Mixture according to claim 1, **characterized in that** R₁, R₂ and R₃ are the same or different and are independently selected from the group consisting of linear or branched, preferably linear, saturated alkyl groups with 7 to 21 carbon atoms, linear or branched, preferably linear, mono- or polyunsaturated alkenyl groups with 7 to 21 carbon atoms, and combinations thereof, preferably consisting of linear or branched, preferably linear, saturated alkyl groups with 11 to 19 carbon atoms, linear or branched, preferably linear, mono- or polyunsaturated alkenyl groups with 11 to 19 carbon atoms, and combinations thereof, and more preferably consisting of linear or branched, preferably linear, saturated alkyl groups with 11 to 17 carbon atoms, linear or branched, preferably linear, mono- or polyunsaturated alkenyl groups with 11 to 17 carbon atoms, and combinations thereof.

3. Mixture according to claim 1 or 2, **characterized in that** x, y and z are the same or different and are independently selected from integer numbers from 1 to 150, preferably from 1 to 100, more preferably from 1 to 75, even more preferably from 3 to 70, particularly preferably from 5 to 65 and extraordinarily preferably from 5 to 60.

4. Method for preparing a mixture of glycerol ester alkoxylates of the formula (I) according to one or more of claims 1 to 3 from ethylene oxide, propylene oxide or mixtures of ethylene oxide and propylene oxide and one or more glycerol esters of the formula (II) 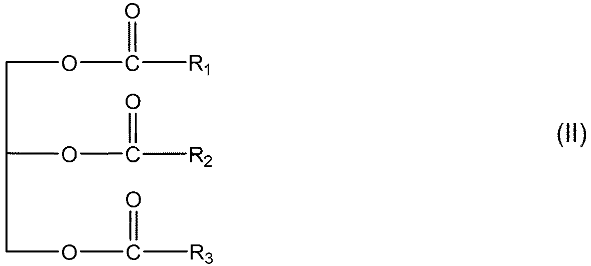 wherein R₁, R₂, and R₃ in formula (II) have the same meaning as in claim 1 or 2 for formula (I), and wherein in the method a catalyst (C) based on an alkaline earth metal is used and at least 25 wt.-%, preferably at least 50 wt.-%, more preferably at least 75 wt.-%, even more preferably at least 90 wt.-% and particularly preferably 100 wt.-% of the carbon atoms of the ethylene oxide, of the propylene oxide or of the mixtures of ethylene oxide and propylene oxide used for the preparation of the mixture of glycerol ester alkoxylates of the formula (I), in each case based on the total weight of the carbon atoms of the ethylene oxide, of the propylene oxide or of the mixtures of ethylene oxide and propylene oxide used for the preparation of the mixture of glycerol ester alkoxylates of the formula (I), are bio-based.

5. The method according to claim 4, **characterized in that** the catalyst (C) is obtainable by a reaction involving
(a) an alkaline earth metal compound (A) and
(b) one or more substances selected from the group consisting of a carboxylic acid (B) preferably comprising 3 to 60, more preferably 3 to 46, carbon atoms; a polyalkylene glycol having a molecular weight from 100 g/mol to 1500 g/mol; a C₁-C₁₈ alkyl-capped polyalkylene glycol having a molecular weight from 100 g/mol to 1500 g/mol; an alcohol solvent; and mixtures including any of the foregoing, and
(c) a strong acid (AC).

6. The method according to claim 5, **characterized in that** the alcohol solvent is an alcohol solvent having 1 to 5 carbon atoms, preferably propan-2-ol, or a mixture thereof with water.

7. The method according to claim 5 or 6, **characterized in that** the strong acid (AC) is an acid which has a pK_{A} value of 3 or less, preferably is selected from the group consisting of acids of sulfur oxides and phosphorus oxides, more preferably from the group consisting of sulfuric acid, sulfurous acid, sulfonic acids (among the sulfonic acids methane sulfonic acid is preferred), phosphorus acid, phosphorous acid and phosphonic acids (among the phosphonic acids methane phosphonic acid is preferred) and even more preferably from the group consisting of sulfuric acid, sulfurous acid and methane sulfonic acid.

8. The method according to one or more of claims 5 to 7, **characterized in that** the strong acid (AC) is sulfuric acid.

9. The method according to one or more of claims 5 to 8, **characterized in that** the molar ratio of the alkaline earth metal compound (A) to the strong acid (AC) is from 1.0:0.1 to 1.0:1.0, preferably from 1.0:0.2 to 1.0:0.9 and more preferably from 1.0:0.3 to 1.0:0.8.

10. The method according to one or more of claims 5 to 9, **characterized in that** the C₁-C₁₈ alkyl-capped polyalkylene glycol having a molecular weight from 100 g/mol to 1500 g/mol is a methyl-capped polyalkylene glycol having a molecular weight from 100 g/mol to 1500 g/mol and preferably is a methyl-capped polyethylene glycol having a molecular weight from 100 g/mol to 1500 g/mol.

11. The method according to one or more of claims 4 to 10, **characterized in that** volatile components are removed before the catalyst (C) is used for the preparation of the mixture of glycerol ester alkoxylates of the formula (I).

12. The method according to one or more of claims 5 to 11, **characterized in that** a carboxylic acid (B) is used in the preparation of the catalyst (C), and the molar ratio of alkaline earth metal compound (A) to carboxylic acid (B) in the preparation of the catalyst (C) is from 1:1 to 1:5, and the carboxylic acid (B) is represented by formula (III),
R⁴-[O]_{q}-[CH₂CH₂-O]ₚ-CH₂COOH (III)
wherein
R⁴ is selected from saturated or unsaturated, linear or branched C₁ to C₃₀ hydrocarbyl chains, preferably C₁ to C₂₂ hydrocarbyl chains, and more preferably C₆ to C₁₈ hydrocarbyl chains,
q is 0 or 1, and
p is, based on molar average, a number from 0 to 11, preferably from 1 to 11, more preferably from 1 to 9, and even more preferably from 2 to 7.

13. Alkoxylation product obtainable by a method according to one or more of claims 4 to 12.

14. Alkoxylation product according to claim 13, **characterized in that** its hydroxyl number is smaller than 15 mg KOH/g.

15. Automatic dishwashing composition comprising the mixture of glycerol ester alkoxylates according to one or more of claims 1 to 3 or the alkoxylation product according to claim 13 or 14.
